# EUROPEAN PATENT SPECIFICATION

(11) **EP 3 566 888 B1**
(45) Date of publication and mention of the grant of the patent: **26.01.2022**
(21) Application number: 19173038.1
(22) Date of filing: 07.05.2019
(51) Int. Cl.: B60C 29/00, B60R 21/274, B60R 21/01

(54) **VALVE ASSEMBLY FOR OPENING AN AIRBAG GAS GENERATOR**
VENTILANORDNUNG ZUM ÖFFNEN EINES AIRBAG-GASGENERATORS
ENSEMBLE DE SOUPAPE POUR L'OUVERTURE D'UN GENERATEUR DE GAZ D'UN AIRBAG

(30) Priority: 08.05.2018 IT 201800005173
(43) Date of publication of application: 13.11.2019
(73) Proprietor: Dainese S.p.A., 36064 Colceresa (Vicenza) (IT)
(72) Inventor: MANUZZI, Marco, 36060 Colceresa (Vicenza) (IT); FORESTAN, Marco, 36064 Colceresa (Vicenza) (IT)
(74) Representative: Manfrin, Marta

(56) References cited:
- WO-A1-85/04144
- WO-A1-90/15013
- US-A- 6 158 380
- US-B2- 9 585 425

## Description

### Technical field of the invention

It is described a valve assembly, for example a magnetic valve assembly, electro-mechanical valve assembly or a valve assembly with a different actuation, to allow the opening of a gas container or so-called gas generator, intended for inflating an airbag. The airbag is preferably, but not exclusively, intended to be incorporated into or associated with, or already incorporated in, or already associated with, a clothing item.

In the following, the actuation of the valve assembly to allow the opening of a gas container or so-called gas generator intended for the inflation of an airbag can be shortly called actuation of the valve for the activation of an airbag.

### Background

The traditionally-used valves for the opening of a gas generator of an airbag, with particular reference to those inserted in protective garment, are operated by mechanical systems, for example of rope type. Generally, in the mechanical opening systems of the gas generators a physical connection of the airbag to the vehicle (for example a motorcycle) is provided, so that the activation of the airbag is determined by the variation of the distance between the vehicle and the user carrying the garment, that is to say by pulling or detaching the connecting rope.

Disadvantageously, this limits the effectiveness of the use of the airbag to the dynamics of the particular risk situation of the user, and negatively affects the timeliness of its activation.

Systems for opening a gas generator by means of a punch are also known. In particular in this case, the opening of the gas generator takes place by means of the punch which is configured to pierce/break a membrane of a gas cartridge, and allow the gas under pressure to escape through a hole made in the membrane towards the member of the airbags.

A drawback of these systems lies in the fact that it is not always possible to guarantee the breakage of the cartridge by means of the punch. For example, the punch may not adequately break the cartridge membrane to allow gas to escape. For example, the punch could enter the cartridge by making a hole in the membrane, but without tearing the latter significantly. It follows that, despite the activation and piercing of the membrane, a sufficient passage of gas leaving the cartridge towards the airbag bag could not be guaranteed.

Moreover, a further drawback of the known assemblies lies in the fact that, especially for certain applications, it is not always possible for a user to operate the punch manually to allow the gas to escape. In fact, normally the airbag systems are used by users on a vehicle and an airbag activation cable is connected to the vehicle. When a fall occurs, the user falls from the vehicle and by pulling the rope activates the airbag. However, especially when a user is not on a vehicle, and therefore cannot connect an activation cable to the vehicle, it is necessary to manually activate the punch, with obvious implications for the overall reliability of the system.

The document US6158380 discloses a protection device with a valve assembly to allow inflation of an airbag member, which valve assembly includes a main body, configured to connect an airbag member and a gas generator for the inflation of said airbag member, a punch movable within said main body to pass from a rest position to an operational position, and actuation means suitable for bringing said punch into said operational position, producing a fluidic connection between the gas generator and the airbag member, in such a way that the gas flows from the gas generator to the airbag member passing inside said punch.

### Summary of the invention

The technical problem posed and solved by the present invention is therefore that of overcoming the aforementioned drawbacks with reference to the prior art, and in particular improving safety in tearing the membrane of the punch.

This problem is solved by claim 1.

Preferred features of the present invention are the subject of the dependent claims.

It is described a valve assembly comprising a punch element, in particular a stamp or striker, or rather a punch.

The valve assembly is suitable for use in opening an airbag gas generator. For convenience, this valve assembly can be simply referred to as an airbag activation valve, with reference to its preferred destination of use.

According to a preferred embodiment of the invention, the valve assembly comprises a substantially tubular shaped punch with longitudinal development, preferably having a cannula body, still more preferably provided with a tapered end adapted to break and penetrate a generator wall.

This punch element creates a fluid connection, either directly or indirectly (that is, through the interposition of further elements), with a gas generator (or cartridge) and with an airbag member. For this purpose, the punch has a through cavity.

The punch is configured precisely to perforate a wall of the gas generator, preferably containing carbon dioxide (CO₂) under pressure, and to allow it to escape. As anticipated, the punch is made by means of a body provided with a longitudinal channel or cavity, or rather a cavity passing from side to side or end to end of the punch, so that the gas can flow through it passing from the generator to the airbag bag. This through-hole of the punch is in direct or indirect communication with the airbag bag.

The fluidic connection between the generator and the airbag member can be made by the punch in cooperation with the main body of the valve.

The main body of the valve is configured in such a way as to provide a guide which allows the punch element to slide during its piercing motion of the wall of the gas generator.

In particular, the punch is movable within the main body to pass from a rest position to an operative penetration position within the wall of the gas generator.

The valve assembly further comprises means for actuating the punch, designed to keep the punch in the operative position, and punch return means, suitable to keep the latter in the rest position. When in the rest position, the punch is inserted into the main body.

According to a first preferred embodiment of the valve assembly according to the present invention, the punch actuation means are magnetic means.

According to this first embodiment, the main body has means for generating a magnetic field, which preferably comprise a metal coil wound around the walls of the guide. When the airbag is not in use, the punch is kept in a resting position by restraining means or return means. The latter comprise elastic return means such as, for example, a helical spring wound around the punch device itself.

In other words, according to this embodiment, there is a direct electro-mechanical actuation system which acts directly on the punch and which is configured to move the latter from the rest position to the operative position.

It is therefore not necessary to use a cable or other element to pull to operate the punch. In fact, the electro-mechanical actuation can be configured automatically by a control unit which detects the status of a user based on sensor data from sensors.

According to a further embodiment of the invention, the restraining means or return means are configured to keep the punch in the rest position and comprise means for generating a magnetic field, whereas the punch is brought into the operative position by means of elastic activation, for example comprising a spring configured for working in compression.

In other words, according to this further embodiment, there is an indirect electro-mechanical actuation system which acts on the return means and which is configured to remove a constraint between said return means and the actuation means. Also in this case, by means of the electromechanical actuation, the constraint which retains the actuation means can be removed, for example purely mechanical actuation means, and the piercing of the membrane can be allowed.

The term "electro-mechanical" means that by applying a certain current, a mechanical movement of the punch is obtained.

The actuation means and/or the return means of the punch are connected to a sensor system suitable for detecting a danger condition associated with collision or impact, programmed to automatically control the activation of the aforementioned actuation and/or return means. For this purpose, the sensor system comprises impact detection sensors, which include for example accelerometers and/or gyroscopes.

If the activation means of the punch include means for generating the magnetic field, the sensor system is programmed so as to control the electrical supply of the coil when this danger condition is detected.

When the coil is crossed by an electric current, a magnetic field is generated that accelerates the punch and causes it to slide through the guide, towards the cartridge. The acceleration provided by the magnetic field is such as to allow the penetration of the punch into the cartridge wall.

Alternatively, the magnetic field is used to act on the return means or restraining means of the actuation means, which can be pure mechanical means, such as a compression spring, a system of levers or similar means for pushing the punch towards the membrane.

An advantage of the present invention according to the aforesaid embodiments is therefore constituted by the fact that, as anticipated, the valve in question is not operated by conventional mechanical systems, for example of the rope type. It follows that the valve of the present invention can also be used in situations where the user is not on a means of transport. The reliability of the system is therefore further improved. Following the punch, the gas can escape from the broken wall of the cartridge and can flow through the internal cavity of the punch.

Advantageously, it follows that if the wall of the cartridge is broken so as not to allow it's a correct/complete emptying, the latter is in any case guaranteed by the presence of the gas exit path through the cavity of the punch. It is therefore possible to solve the problem of the known art of the risk of insufficient tearing of the cartridge membrane.

Furthermore, security containment elements can be provided to retain the gas leaving the generator.

It is therefore described a combination comprising the valve assembly with a gas generator or cartridge, and also an airbag member.

It is therefore described a use of a valve equipped with such a punch to pierce the wall of a gas cylinder or cartridge and allow it to escape into an airbag member to be inflated.

The scope of application of the punch according to the present invention is, for example, that of an airbag associated with a vest or jacket, which is activated to protect the user from impact when the electronic sensor detects a dangerous condition and controls the operation of the punch machine itself.

Alternatively, the gas generator can be used to inflate airbags or generic inflatable means in other fields of application.

Advantageously, the preferred embodiments of the invention which provide for the elimination of the traditional control mechanisms of the valve which perforates the gas generator allow a considerable reduction of internal friction and of the actuation time with respect to the systems of known art, eliminating dangerous delays when inflating the airbag.

Other advantages, features and methods of use of the present invention will become apparent from the following detailed description of some embodiments, presented by way of example and not of limitation.

### Short description of the figures

Reference will be made to the attached figures, wherein:

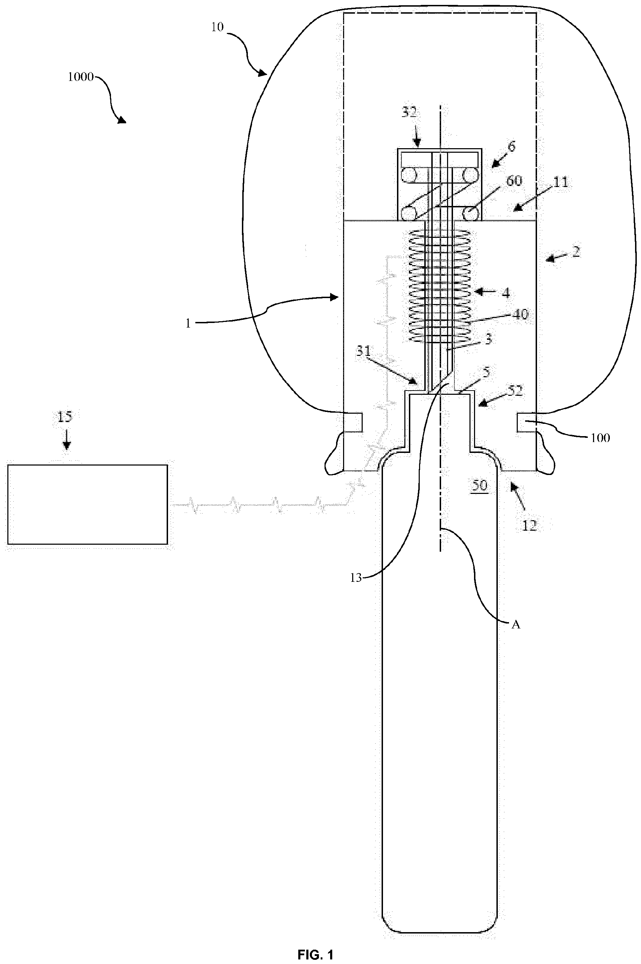

Figure 1 schematically shows a protection device including a valve assembly according to a first embodiment of the present invention.
Figure 1 indicated above is to be intended exclusively for illustrative and non-limiting purposes.
Figure 2 schematically shows a protection device including a valve assembly according to a second embodiment of the present invention.

### Detailed description of preferred embodiments

With reference to Figure 1, a first preferred embodiment of a protection device including a valve assembly according to the present invention is shown, which can be used to activate an airbag member 10 and denoted as a whole by 1.

The valve assembly 1 is suitable to allow the inflation of inflatable elements or airbag members 10 quickly and with a reduction in the risk of incorrect and incomplete inflation, to increase the safety of the user. In particular, the configuration of the valve assembly 1 can make particularly advantageous its integration in airbags 100 installed in garments for personal protection, such as for example the protective jackets for motorcyclists.

The valve 1 comprises firstly a main body 2 and a punch element 3, movable inside it. According to an aspect of the present invention, the punch element 3 is internally hollow, i.e. it has a cannula shape.

The main body 2 is configured to connect the airbag member 10 with a gas generator 50. More specifically, the main body 2 is configured to be received at least partially in the airbag member 10 and interposed between an area inside the airbag member 10 and a gas generator 50 for the inflation of this airbag member 10, for example a carbon dioxide generator. Even more particularly, the airbag member 10 is fixed on an external side of the main body 2. The fixing is such as to withstand the pressures generated inside the airbag member 10. For example, the fixing is obtained by means of a strip 100.

Although in the specific example object of the present description a gas generator 50 suitable for inflating airbag members is described, it is possible to provide for the use of the valve assembly 1 in conjunction with any generic fluid container suitable for inflating an airbag member 10 - in particular a pressurized gas - provided that this container bears at least one pierceable wall.

As shown in Figure 1, the main body 2 acts as a sliding guide for the punch 3. In particular, the main body 2 has an internal cavity 13 which runs from side to side, configured in such a way that punch 3 is free to slide through it. By virtue of the fact that the main body 2 acts as a guide for the sliding of the punch 3, in the specific case also the main body is tubular.

In the embodiment of the present description, both the main body 2 and the punch 3 have a substantially tubular rectilinear conformation, elongated along a main development direction A which corresponds to the sliding direction of the punch 3 in the main body 2. In particular, the punch 3 has a through cavity developed along the main development direction A, as shown in Figure 1.

Preferably, on the surface of the cavity of the main body 2 configured to come into contact with the punch 3, a surface finishing is applied aimed at reducing the asperities, to minimize frictions with the punch 3. Similarly, the punch 3 also has the external surface finished in such a way that the roughness is as low as possible, to minimize friction during sliding in the main body 2 and to reduce the force necessary for its movement.

As shown in Figure 1, the main body 2 is configured in such a way that one of its first longitudinal ends 12 can be coupled with the gas generator 50, in particular by means of a shape coupling, for example by screwing. Substantially at the coupling or screwing area, on the external surface of the main body 2 there is the airbag member 10 with the respective fixing device, for example the strip.

In the preferred embodiment shown in Figure 1, the gas generator 50 has a dispensing mouth 52 at which the pierceable wall 5 is made. Preferably, in use, the dispensing mouth 52 is entirely circumscribed by the main body 2, which can therefore bear, at its first longitudinal end 12, a suitably shaped seat for receiving the dispensing mouth 52 of the gas generator 50.

For example, the profile of the main body portion 2 at the first longitudinal end 12 may match the profile of the gas generator portion 50 comprising the pierceable wall 5. The same applies to the coupling between the second longitudinal end 11 of the main body 2 and the airbag member 10, which in Figure 1 completely circumscribes it. In addition, further means of positioning and/or mutual locking of the main body 2 with the airbag member 10 and the gas generator 50 can be provided.

Preferably, the punch 3 has an oblong configuration and carries a first terminal end 31 with a substantially tapered profile, intended to penetrate the wall 5 of the gas generator 50. In particular, the first terminal end 31 can be cut obliquely to form a conformation with flute spout, to obtain a perforation profile capable of cutting the wall 5 in a precise and uniform manner and maintaining the margins of the penetration hole regular.

In particular, the punch 3 is movable within the main body 2 to pass from a rest position to an operative position. The rest position corresponds to a configuration of non-penetration of the punch 3 into the wall 5. The operative position corresponds, in use, to a configuration of penetration of the punch 3 into the wall 5 of the gas generator 50.

It is to be understood that also the main body 2 is provided with holes (not visible in the drawings) for the release of the inflation gas at the time of activation.

In order to make the punch 3 pass from the above-mentioned rest position to the operative position, the valve assembly 1 comprises actuation means 4, in particular preferably, magnetically actuation means, which can be selectively activated.

According to the preferred embodiment object of the present description, the punch 3 is configured to react to an electromagnetic force, therefore it is preferably made of ferromagnetic material.

The actuation means 4, preferably magnetic, of the punch 3 can comprise a coil 40 (solenoid) wound around the portion of the valve body 2 shaped as a sliding guide for the punch 3. The coil 40 is preferably constituted by a wire winding in strongly conductive material, for example of copper.

When the actuation means 4 are activated, i.e. when, for example, the coil 40 is crossed by an electric current, they generate a magnetic field which acts on the punch 3. In particular, the solenoid geometry of the coil 40 allows to convey the magnetic force generated by the current electricity that runs through the center of the coils that make the winding itself.

To maintain the punch 3 in the rest position, return means 6 are provided, in particular elastic return means, which in the preferred embodiment of Figure 1 are made by a helical return spring 6 which works by compression.

In particular, the spring 6 is interposed between an abutment element, for example a plate, made at a second terminal end 32 of the punch 3 and an abutment profile made on the main body 2. The spring 6 is also wound around the punch 3 itself. The abutment element also acts as an end of stroke for the punch 3 in its movement of translation towards the wall 5.

According to the described embodiment, the punch 3 has an overall T-shape, wherein the vertical rod of the T is constituted by the hollow main body of the punch, and the horizontal rod of the T by the plate.

The distance between the plate and the abutment surface substantially corresponds (except for the bulk of the spring when it is completely compressed with the coils all in contact, or in a pack) to the maximum stroke of the punch 3 in its sliding motion within the main body 2.

The overall configuration of the valve assembly 1 is such that, when the magnetic actuation means 4 are not activated, the spring 6 keeps the punch 3 in the rest position, keeping the plate separated from the abutment portion of the valve body 2 by a distance substantially equal to the length of the spring 6 at rest.

When the magnetic actuation means 4 are activated, the force exerted by the magnetic field on the punch 3 has an intensity such as to accelerate the punch 3 towards the wall 5 of the gas generator 50, compressing the spring 6, and overcome the resistance to penetration of the wall 5 itself.

Naturally, the person skilled in the art will provide for the sizing of the magnetic actuation means and the choice of the electrical parameters according to design parameters such as the force necessary to compress the spring 6 and the resistance to penetration from the wall 5 of the gas generator 50.

To allow the automatic activation of the actuation means 4 of the punch 3, and therefore ultimately the inflation of the airbag 100, a sensor system or activation system 15 can be further provided.

The activation system 15 is able to detect a danger condition associated with impact or collision and to automatically control the activation of the aforementioned actuation means 4 when this condition is verified.

According to the preferred embodiment shown in Figure 1, the activation system 15 comprises means designed to send a signal to the magnetic actuation means 4 such that they generate a magnetic field of sufficient intensity to accelerate the punch 3 towards the wall 5 of the generator of gas 50, to allow the airbag member 10 to be inflated in the manner already illustrated. The triggered signal sent may be an electrical signal, as in the preferred embodiment described herein.

The activation system 15 comprises one or more sensors configured to detect data relating to parameters which indicate the occurrence of situations of risk or danger for the user.

The sensors are connected to a control unit that processes the data detected according to predetermined algorithms and, based on the results of the processing, sends the activation signal to the magnetic actuation means 4.

Advantageously, this signal can be a wireless electric signal to minimize the size of the airbag and to reduce activation times.

A preferred mode of operation of the valve assembly 1 according to the present invention is described below.

The activation system 15 detects a dangerous situation for the user and sends the activation signal to the magnetic actuation means 4. The magnetic actuation means 4 generate a magnetic field which accelerates the punch 3 towards the wall 5 of the gas generator 50. The punch 3 continues its travel through the main body 2 until it breaks and penetrates the wall 5. The overall configuration of the valve assembly 1 is such that, at the time of the operating position of penetration of the punch 3 into the wall 5, the punch 3 makes a fluidic connection between the gas generator 50 and the airbag member 10, so that the gas passes from the gas generator 50 to the airbag member 10.

When the activation system 15 detects the end of the danger situation, it stops sending the activation signal to the magnetic actuation means 4, which are therefore deactivated (the coil 40 is de-energized). The thrust of the return spring 6, no longer opposed by the action of the magnetic field, returns the punch 3 to the rest position, but the passage of the fluid is not interrupted and continues freely, until the gas generator is emptied. In addition, the fluid can further escape from the broken wall 5 without being channeled into the punch 3. In this way, complete emptying of the gas generator 50 is ensured to contain the fluid leaving the generator 50 and not channeled into the punch 3, one or more containing elements may be provided which are arranged to circumscribe the valve assembly 1.

After use, the exhaust gas generator can be simply uncoupled from the valve 1 assembly and replaced with a new gas generator, ready for subsequent use. No action is needed instead on the valve 1 assembly after use, because, as anticipated, it automatically returns to the rest position and is ready for a new use.

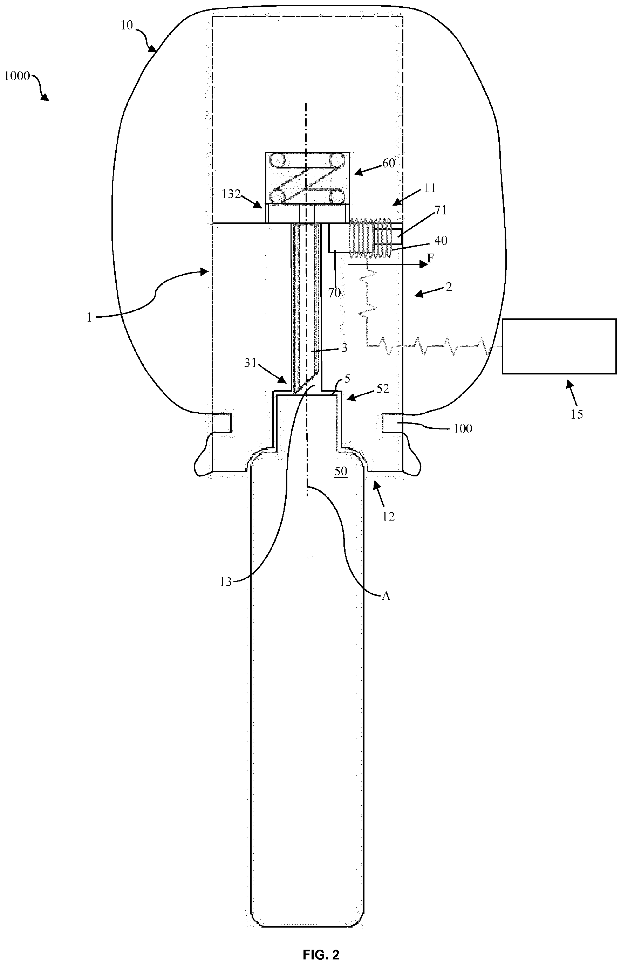

With reference to Figure 2, a second preferred embodiment of the present invention is described below, which will be described only with respect to the differences with respect to that shown in Figure 1. It should be noted that elements and configurations homologous to those already described in relation to the previous embodiment they have the same name.

According to this further embodiment, the punch 3 is maintained in the operative position by mechanical or electro-mechanical actuation means, even more preferably elastic, in particular comprising a spring configured to work by compression. The spring 60 is configured to keep the punch in the operative position when it is in a rest configuration, that is when external stresses do not act on the spring.

In other words, according to this embodiment, the actuation means are configured to keep the valve normally open.

The spring 60 can be wound around the punch, in particular interposed between a counter element 132 of the punch itself, for example a plate, and an abutment profile made on the main body. The action of the spring 60 on the punch counterpart element causes it to slide within the guide made by the main body 2 until the operative position is reached.

The return means are configured to selectively oppose the action of the actuation means, in the specific example of the action of the spring 60, and to keep the punch in the rest configuration. According to the embodiment described herein, the return means comprise locking elements or retention means and means for generating a magnetic field. Specifically, these locking elements or retention means can comprise a tooth element intended to hold the punch in a retracted position.

In particular, the tooth is constituted by a cylinder 70 which slides on a piston 71 fixed to the main body 2 of the valve 1. In particular, the cylinder 70 is able to assume a first position corresponding with the resting condition of the punch and a second position corresponding with the operating position of the punch. More specifically, said first position corresponds to a position in which the cylinder 70 is extended with respect to the piston 71. This configuration is such as to prevent the actuation means from bringing the punch to the operating position. More particularly, in said first position the cylinder 70 is at least partially superimposed with the plate formed at a second terminal end 132 of the punch 3 in the direction of the force exerted by the spring on the punch and consequently prevents the expansion of the spring. The magnetic return means are configured to generate a magnetic field acting on said locking elements so as to allow the punch to reach the operative position. Specifically, the generation of a magnetic field produces a sliding of the cylinder 70 with respect to the piston 71 in the direction indicated by the arrow F, that is to say, moving away from the punch device 3. This sliding makes the cylinder 70 no longer overlap the plate of the terminal end 32 of the punch 3, consequently allowing the extension of the aforementioned spring.

Alternatively, the magnetic return means are configured to exert directly on the punch a force that counteracts the elastic return force of the activation means.

In other words, when the magnetic return means are active and generate a magnetic field, the action of the actuation means is inhibited and the punch remains in the rest position, therefore the valve is in the closed configuration.

According to this embodiment, the activation system 15 is programmed to automatically control the deactivation of the magnetic return means which keep the punch in the rest position in case the dangerous situation is detected.

When these magnetic return means are deactivated, the punch is brought into the operative position by the elastic activation means and perforates the wall of the gas generator.

As for the previously described embodiment, following the piercing of the generator wall, the gas flows in the airbag member due to the pressure gradient between the gas generator (inside which the pressure is greater than the atmospheric pressure) and the airbag member (in which the pressure is equal to atmospheric pressure), causing the airbag to inflate and therefore activate the airbag itself.

Moreover, as described above, also for this embodiment the person skilled in the art, knowing the characteristics of the membrane to be pierced and those of the punch, will provide for the correct sizing of the actuation means and of the return means.

The present invention has been so far described with reference to preferred embodiments. It is to be understood that there may be other embodiments which refer to the same inventive core, as defined by the scope of protection of the claims set forth below.

## Claims

1. Protection device (1000), comprising:
an electro-mechanical valve assembly (1) to allow inflation of an airbag member (10),
a gas generator (50),
an airbag (100) associated with said valve assembly (1) and comprising the airbag member (10), said airbag member (10) being fluidically connected to said gas generator (50) by said electro-mechanical valve assembly (1);
an activation system (15) of said valve assembly (1), said activation system including:
one or more sensors configured to detect data related to parameters that indicate the occurrence of a risk or danger condition; and
a control unit connected to said one or more sensors, programmed for processing said data to determine the occurrence of said risk condition or danger and automatically send an activation signal to said actuation means if said risk or danger condition is verified,
which electro-mechanical valve assembly (1) includes:
- a main body (2), configured to connect the airbag member (10) and the gas generator (50) for the inflation of said airbag member (10); and wherein the main body (2) is configured to be received at least partially in the airbag member (10) and interposed between an area inside the airbag member (10) and the gas generator (50) for the inflation of the airbag member (10) and wherein said main body (2) is configured in such a way as to establish a shape coupling with the gas generator (50) in the region of one of its longitudinal ends (12), and that at a coupling area, on the external surface of the main body (2), there is the airbag member (10) with a respective fixing device, wherein the fixing is such as to withstand the pressures generated inside the airbag member (10);
- a punch (3) movable within said main body (2) to pass from a rest position to an operative position and wherein said main body (2) presents a sliding guide for said punch (3), wherein said punch (3) has a through cavity, wherein the operative position corresponds, in use, to a configuration of penetration of said punch (3) within a wall (5) of the gas generator (50); and
- actuation means (4) suitable for bringing said punch (3) into said operative position, the overall configuration of said valve assembly (1) being such that when in said operative position said punch (3) determines a fluidic connection between the gas generator (50) and the airbag member (10), in such a way that the gas flows from the gas generator (50) to the airbag member (10) passing inside said punch (3).

2. Protection device (1000) according to the previous claim, wherein said punch (3) presents an oblong configuration and bears a first terminal end (31) having a tapered or pointed profile intended to penetrate the wall (5) of the gas generator (50) and wherein said punch (3) presents an extended body along a longitudinal direction and said through cavity is a longitudinal cavity, and/or wherein said main body and/or said punch (3) presents a tubular configuration and/or said punch (3) is a cannula body.

3. Protection device (1000) according to any one of the preceding claims, wherein the electro-mechanical valve assembly (1) comprising return means (6) of said punch (3), suitable for maintaining the latter in said rest position.

4. Protection device (1000) according to any one of the preceding claims, wherein said actuation means (4) comprise magnetic driving means operable to move said punch (3) from said rest position to said operative position.

5. Protection device (1000) according to claim 4, wherein said punch (3) is made of ferromagnetic material.

6. Protection device (1000) according to claim 4 or 5, wherein said magnetic actuation means (4) comprise a coil (40) wound around said sliding guide of said main body (2), which coil (40) is connected or connectable to an activation system (15).

7. Protection device (1000) according to any one of the claims from 4 to 6, comprising elastic return means (6) of said punch (3), suitable for maintaining the latter in said rest position when said magnetic actuation means (4) are not activated.

8. Protection device (1000) according to any one of the prior claims, wherein said actuation means (4) are wound around said punch (3).

9. Protection device (1000) according to claim 7 or 8, wherein said punch (3) comprises, in the region of a second terminal end (32), an abutment element, preferably a plate, on which said elastic return means (6) are attested and wherein the elastic return means (6) are interposed between said abutment element and an abutment profile formed on said main body (2).

10. Protection device (1000) according to the preceding claim, wherein said punch (3) has an overall "T" configuration, in which the horizontal rod of the "T" is formed by said abutment element.

11. Protection device (1000) according to any one of claims from 7 to 10, wherein said elastic return means (6) comprise a spring (60) which works in compression in said operative position.

12. Protection device (1000) according to any one of the claims from 7 to 11, wherein said magnetic actuation means (4) are configured to generate, in use, a magnetic field acting on said punch (3) of such intensity as to overcome the force exerted by said elastic return means (6) and to move said punch (3) towards the wall (5) of the gas generator (50) in such a way as to perforate it.

13. Protection device (1000) according to any one of the claims from 1 to 4, wherein said actuation means (4) are elastic or spring actuation, or mechanically actuated means, configured to maintain said punch (3) in said operative position.

14. Protection device (1000) according to the previous claim, comprising magnetic return means configured to oppose the action of said elastic actuation means, which can be activated to keep said punch (3) in said rest configuration, said magnetic return means comprising means for generating a magnetic field.

15. Protection device (1000) according any preceeding claims, wherein said gas generator (50) is a container of under-pressure gas or a cartridge containing carbon dioxide.

16. Personal protection garment comprising a protection device (1000) according to anyone of the preceeding claims.

## Patentansprüche

1. Schutzvorrichtung (1000), aufweisend:
eine elektromechanische Ventilanordnung (1), um das Aufblasen eines Airbag-Elements (10) zu ermöglichen,
einen Gasgenerator (50),
einen Airbag (100), welcher der Ventilanordnung (1) zugehörig ist und das Airbag-Element (10) aufweist, wobei das Airbag-Element (10) über die elektromechanische Ventilanordnung (1) fluidisch mit dem Gasgenerator (50) verbunden ist;
ein Aktivierungssystem (15) der Ventilanordnung (1), wobei das Aktivierungssystem Folgendes umfasst:
einen oder mehrere Sensoren, die dafür ausgelegt sind, Daten zu erfassen, die sich auf Parameter beziehen, die das Auftreten eines Risiko- oder Gefahrzustands anzeigen; und
eine Steuereinheit, die mit dem einen oder den mehreren Sensoren verbunden und zum Verarbeiten der Daten programmiert ist, um das Auftreten des Risikozustands oder der Gefahr zu bestimmen und automatisch ein Aktivierungssignal an eine Betätigungseinrichtung zu senden, wenn sich der Risiko- oder Gefahrzustand bestätigt, wobei die elektromechanische Ventilanordnung (1) Folgendes umfasst:
- einen Hauptkörper (2), der dafür ausgelegt ist, das Airbag-Element (10) und den Gasgenerator (50) zum Aufblasen des Airbag-Elements (10) zu verbinden; und wobei der Hauptkörper (2) dafür ausgelegt ist, zumindest teilweise im Airbag-Element (10) aufgenommen zu sein und sich zwischen einem Bereich im Inneren des Airbag-Elements (10) und dem Gasgenerator (50) zum Aufblasen des Airbag-Elements (10) zu befinden, und wobei der Hauptkörper (2) so ausgelegt ist, dass er eine Formschlussverbindung mit dem Gasgenerator (50) im Bereich eines einer Längsenden (12) bildet, und dass sich an einem Verbindungsbereich an der Außenfläche des Hauptkörpers (2) das Airbag-Element (10) mit einer entsprechenden Befestigungsvorrichtung befindet, wobei die Befestigung dergestalt ist, dass sie den Drücken widersteht, die im Inneren des Airbag-Elements (10) entstehen;
- einen Stempel (3), der im Inneren des Hauptkörpers (2) bewegbar ist, um von einer Ruheposition in eine Betriebsposition zu gelangen, und wobei der Hauptkörper (2) eine Gleitführung für den Stempel (3) aufweist, wobei der Stempel (3) einen durchgehenden Hohlraum hat, wobei die Betriebsposition in Gebrauch einer Konfiguration des Eindringens des Stempels (3) in eine Wand (5) des Gasgenerators (50) entspricht; und
- eine Betätigungseinrichtung (4), die geeignet ist, um den Stempel (3) in die Betriebsposition zu bringen, wobei die Gesamtgestaltung der Ventilanordnung (1) dergestalt ist, dass, wenn sie in der Betriebsposition ist, der Stempel (3) eine fluidische Verbindung zwischen dem Gasgenerator (50) und dem Airbag-Element (10) bestimmt, so dass das Gas vom Gasgenerator (50) zum Airbag-Element (10) strömt, wobei es im Inneren des Stempels (3) hindurchströmt.

2. Schutzvorrichtung (1000) nach dem vorhergehenden Anspruch, wobei der Stempel (3) eine längliche Gestaltung hat und ein erstes Abschlussende (31) trägt, das ein sich verjüngendes oder zugespitztes Profil hat, das dafür gedacht ist, die Wand (5) des Gasgenerators (50) zu durchstoßen, und wobei der Stempel (3) einen verlängerten Körper entlang einer Längsrichtung aufweist und der durchgehende Hohlraum eine Längshohlraum ist, und/oder wobei der Hauptkörper und/oder der Stempel (3) eine rohrförmige Gestaltung aufweist und/oder der Stempel (3) ein Kanülenkörper ist.

3. Schutzvorrichtung (1000) nach einem der vorhergehenden Ansprüche, wobei die elektromechanische Ventilanordnung (1) eine Rückführeinrichtung (6) des Stempels (3) aufweist, die geeignet ist, um letzteren in der Ruheposition zu halten.

4. Schutzvorrichtung (1000) nach einem der vorhergehenden Ansprüche, wobei die Betätigungseinrichtung (4) eine magnetische Antriebseinrichtung aufweist, die dahingehend funktionsfähig ist, den Stempel (3) von der Ruheposition zur Betriebsposition zu bewegen.

5. Schutzvorrichtung (1000) nach Anspruch 4, wobei der Stempel (3) aus einem ferromagnetischen Material besteht.

6. Schutzvorrichtung (1000) nach Anspruch 4 oder 5, wobei die magnetische Betätigungseinrichtung (4) eine Spule (40) aufweist, die um die Gleitführung des Hauptkörpers (2) gewunden ist, wobei die Spule (40) mit einem Aktivierungssystem (15) verbunden oder mit diesem verbindbar ist.

7. Schutzvorrichtung (1000) nach einem der Ansprüche 4 bis 6, die eine elastische Rückführeinrichtung (6) des Stempels (3) aufweist, die geeignet ist, um letzteren in der Ruheposition zu halten, wenn die magnetische Betätigungseinrichtung (4) nicht aktiviert ist.

8. Schutzvorrichtung (1000) nach einem der vorhergehenden Ansprüche, wobei die Betätigungseinrichtung (4) um den Stempel (3) gewunden ist.

9. Schutzvorrichtung (1000) nach Anspruch 7 oder 8, wobei der Stempel (3) im Bereich eines zweiten Abschlussendes (32) ein Anlageelement aufweist, vorzugsweise eine Platte, an der die elastische Rückführeinrichtung (6) anliegt, und wobei sich die elastische Rückführeinrichtung (6) zwischen dem Anlageelement und einem am Hauptkörper (2) ausgebildeten Anlageprofil befindet.

10. Schutzvorrichtung (1000) nach dem vorhergehenden Anspruch, wobei der Stempel (3) insgesamt eine "T"-Gestaltung hat, bei welcher der horizontale Stab des "T" durch das Anlageelement gebildet ist.

11. Schutzvorrichtung (1000) nach einem der Ansprüche 7 bis 10, wobei die elastische Rückführeinrichtung (6) eine Feder (60) aufweist, die in der Betriebsposition unter Kompression arbeitet.

12. Schutzvorrichtung (1000) nach einem der Ansprüche 7 bis 11, wobei die magnetische Betätigungseinrichtung (4) dafür ausgelegt ist, in Gebrauch ein auf den Stempel (3) wirkendes Magnetfeld von solcher Intensität zu erzeugen, dass die von der elastischen Rückführeinrichtung (6) ausgeübte Kraft überwunden und der Stempel (3) zur Wand (5) des Gasgenerators (50) bewegt wird, um sie zu durchstoßen.

13. Schutzvorrichtung (1000) nach einem der Ansprüche 1 bis 4, wobei die Betätigungseinrichtung (4) eine elastische Betätigung oder Federbetätigung darstellt oder eine mechanisch betätigte Einrichtung ist, die dafür ausgelegt ist, den Stempel (3) in der Betriebsposition zu halten.

14. Schutzvorrichtung (1000) nach dem vorhergehenden Anspruch, mit einer magnetischen Rückführeinrichtung, die dafür ausgelegt ist, der Wirkung der elastischen Betätigungseinrichtung entgegenzuwirken, die aktiviert werden kann, um den Stempel (3) in der Ruhekonfiguration zu halten, wobei die magnetische Rückführeinrichtung eine Einrichtung zum Erzeugen eines Magnetfeldes aufweist.

15. Schutzvorrichtung (1000) nach allen vorhergehenden Ansprüchen, wobei der Gasgenerator (50) einen Behälter mit unter Druck stehendem Gas oder eine Kartusche darstellt, die Kohlendioxid enthält.

16. Persönliche Schutzkleidung, die eine Schutzvorrichtung (1000) nach einem der vorhergehenden Ansprüche aufweist.

## Revendications

1. Dispositif de protection (1000) comprenant :
un ensemble de valve électromécanique (1) pour permettre le gonflage d'un élément de coussin de sécurité gonflable (10),
un générateur de gaz (50),
un coussin de sécurité gonflable (100) associé avec ledit ensemble de valve (1) et comprenant l'élément de coussin de sécurité gonflable (10), ledit élément de coussin de sécurité gonflable (10) étant raccordé, de manière fluidique, audit générateur de gaz (50) par ledit ensemble de valve électromécanique (1) ;
un système d'activation (15) dudit ensemble de valve (1), ledit système d'activation comprenant :
un ou plusieurs capteurs configurés pour détecter des données relatives aux paramètres qui indiquent l'occurrence d'une condition de risque ou de danger ; et
une unité de commande raccordée auxdits un ou plusieurs capteurs, programmée pour traiter lesdites données afin de déterminer l'occurrence de ladite condition de risque ou de danger et envoyer automatiquement un signal d'activation auxdits moyens d'actionnement si ladite condition de risque ou de danger est vérifiée, lequel ensemble de valve électromécanique (1) comprend :
un corps principal (2) configuré pour raccorder l'élément de coussin de sécurité gonflable (10) et le générateur de gaz (50) pour le gonflage dudit élément de coussin de sécurité gonflable (10); et dans lequel le corps principal (2) est configuré pour être reçu au moins partiellement dans l'élément de coussin de sécurité gonflable (10) et intercalé entre une zone à l'intérieur de l'élément de coussin de sécurité gonflable (10) et le générateur de gaz (50) pour le gonflage de l'élément de coussin de sécurité gonflable (10) et dans lequel ledit corps principal (2) est configuré afin d'établir une forme se couplant avec le générateur de gaz (50) dans la région de l'une de ses extrémités longitudinales (12) et que, au niveau d'une zone de couplage, sur la surface externe du corps principal (2), on trouve un élément de coussin de sécurité gonflable (10) avec un dispositif de fixation respectif, dans lequel la fixation est telle qu'elle résiste aux pressions générées à l'intérieur de l'élément de coussin de sécurité gonflable (10) ;
un poinçon (3) mobile à l'intérieur dudit corps principal (2) pour passer d'une position inactive à une position opérationnelle et dans lequel ledit corps principal (2) présente un guide coulissant pour ledit poinçon (3), dans lequel ledit poinçon (3) a une cavité débouchante, dans lequel la position opérationnelle correspond, à l'usage, à une configuration de pénétration dudit poinçon (3) à l'intérieur d'une paroi (5) du générateur de gaz (50) ; et
des moyens d'actionnement (4) appropriés pour amener ledit poinçon (3) dans ladite position opérationnelle,
la configuration globale dudit ensemble de valve (1) étant telle que, lorsqu'il est dans ladite position opérationnelle, ledit poinçon (3) détermine un raccordement fluidique entre le générateur de gaz (50) et l'élément de coussin de sécurité gonflable (10), de sorte que, le gaz s'écoule du générateur de gaz (50) à l'élément de coussin de sécurité gonflable (10) passant à l'intérieur dudit poinçon (3).

2. Dispositif de protection (1000) selon la revendication précédente, dans lequel ledit poinçon (3) présente une configuration oblongue et supporte une première extrémité terminale (31) ayant un profil progressivement rétréci ou pointu prévu pour pénétrer dans la paroi (5) du générateur de gaz (50) et dans lequel ledit poinçon (3) présente un corps étendu le long d'une direction longitudinale et ladite cavité débouchante est une cavité longitudinale, et/ou dans lequel ledit corps principal et/ou ledit poinçon (3) présente une configuration tubulaire et/ou ledit poinçon (3) est un corps de canule.

3. Dispositif de protection (1000) selon l'une quelconque des revendications précédentes, dans lequel l'ensemble de valve électromécanique (1) comprend des moyens de rappel (6) dudit poinçon (3), appropriés pour maintenir ce dernier dans ladite position inactive.

4. Dispositif de protection (1000) selon l'une quelconque des revendications précédentes, dans lequel lesdits moyens d'actionnement (4) comprennent des moyens d'entraînement magnétique opérationnels pour déplacer ledit poinçon (3) de ladite position inactive à ladite position opérationnelle.

5. Dispositif de protection (1000) selon la revendication 4, dans lequel ledit poinçon (3) est réalisé avec un matériau ferromagnétique.

6. Dispositif de protection (1000) selon la revendication 4 ou 5, dans lequel lesdits moyens d'actionnement magnétiques (4) comprennent une bobine (40) enroulée autour dudit guide coulissant dudit corps principal (2), laquelle bobine (40) est raccordée ou peut être raccordée à un système d'activation (15).

7. Dispositif de protection (1000) selon l'une quelconque des revendications 4 à 6, comprenant des moyens de rappel élastiques (6) dudit poinçon (3), appropriés pour maintenir ce dernier dans ladite position inactive lorsque lesdits moyens d'actionnement magnétiques (4) ne sont pas activés.

8. Dispositif de protection (1000) selon l'une quelconque des revendications précédentes, dans lequel lesdits moyens d'actionnement (4) sont enroulés autour dudit poinçon (3).

9. Dispositif de protection (1000) selon la revendication 7 ou 8, dans lequel ledit poinçon (3) comprend, dans la région d'une seconde extrémité terminale (32), un élément de butée, de préférence une plaque, sur lequel lesdits moyens de rappel élastiques (6) sont attestés et dans lequel les moyens de rappel élastiques (6) sont intercalés entre ledit élément de butée et un profil de butée formé sur ledit corps principal (2).

10. Dispositif de protection (1000) selon la revendication précédente, dans lequel ledit poinçon (3) a une configuration globale en « T », dans laquelle la tige horizontale du « T » est formée par ledit élément de butée.

11. Dispositif de protection (1000) selon l'une quelconque des revendications 7 à 10, dans lequel lesdits moyens de rappel élastiques (6) comprennent un ressort (60) qui fonctionne en compression dans ladite position opérationnelle.

12. Dispositif de protection (1000) selon l'une quelconque des revendications 7 à 11, dans lequel lesdits moyens d'actionnement magnétiques (4) sont configurés pour générer, à l'usage, un champ magnétique agissant sur ledit poinçon (3) d'une intensité telle qu'il vient à bout de la force exercée par lesdits moyens de rappel élastiques (6) et afin de déplacer ledit poinçon (3) vers la paroi (5) du générateur de gaz (50) afin de la perforer.

13. Dispositif de protection (1000) selon l'une quelconque des revendications 1 à 4, dans lequel lesdits moyens d'actionnement (4) sont des moyens actionnés par actionnement élastique ou à ressort ou mécaniquement, configurés pour maintenir ledit poinçon (3) dans ladite position opérationnelle.

14. Dispositif de protection (1000) selon la revendication précédente, comprenant des moyens de rappel magnétiques configurés pour s'opposer à l'action desdits moyens d'actionnement élastique, qui peuvent être activés pour maintenir ledit poinçon (3) dans ladite configuration inactive, lesdits moyens de rappel magnétiques comprenant des moyens pour générer un champ magnétique.

15. Dispositif de protection (1000) selon l'une quelconque des revendications précédentes, dans lequel ledit générateur de gaz (50) est un récipient de gaz sous pression ou une cartouche contenant du dioxyde de carbone.

16. Vêtement de protection personnelle comprenant un dispositif de protection (1000) selon l'une quelconque des revendications précédentes.
